# EUROPÄISCHE PATENTSCHRIFT

(11) **EP 0 456 671 B1**
(45) Veröffentlichungstag und Bekanntmachung des Hinweises auf die Patenterteilung: **05.05.1993**
(21) Anmeldenummer: 90902186.7
(22) Anmeldetag: 01.02.1990
(51) Int. Cl.: B65D 81/12, B65D 81/02, B31F 1/07

(54) **SCHÜTTFÄHIGES PACKMATERIAL, DARAUS HERGESTELLTE PACKEINHEIT UND VERFAHREN UND EINRICHTUNG ZU DESSEN BZW. DEREN HERSTELLUNG**
BULK MATERIAL FOR PACKAGING, PACKAGING SYSTEM USING SAME; PROCESS AND DEVICE FOR PRODUCING THEM
MATERIAU D'EMBALLAGE EN VRAC ET SYSTEME DE CONDITIONNEMENT EN FAISANT USAGE; PROCEDE ET DISPOSITIF DE FABRICATION CORRESPONDANTS

(30) Priorität: 04.02.1989 DE 3903382
(43) Veröffentlichungstag der Anmeldung: 21.11.1991
(73) Patentinhaber: SPERNER, Franz, D-72654 Neckartenzlingen (DE)
(72) Erfinder: SPERNER, Franz, D-72654 Neckartenzlingen (DE)
(74) Vertreter: Dreiss, Fuhlendorf, Steimle & Becker, Patentanwälte
(86) Internationale Anmeldenummer: EP9000181
(87) Internationale Veröffentlichungsnummer: WO9008709

(56) Entgegenhaltungen:
- EP-A- 0 226 693
- WO-A-85/03029
- DE-A- 2 437 968
- FR-A- 1 252 185
- GB-A- 838 205
- GB-A- 2 186 864
- US-A- 1 995 057
- US-A- 3 071 907
- US-A- 4 047 360
- US-A- 4 340 342

## Beschreibung

Die vorliegende Erfindung bezieht sich auf schüttfähiges Packmaterial, eine daraus hergestellte Packeinheit, ein verfahren und eine Einrichtung zur Herstellung des Packmaterials und auf ein Verfahren zur Herstellung der Packeinheit.

Beim Verpacken zerbrechlicher Gegenstände, wie Glas, Keramik oder dgl. oder auch feinmechanischer Geräte und Maschinen ist es bekannt, den Zwischenraum zwischen dem betreffenden Gegenstand und dem Transportbehältnis oder -karton mit volumenfüllendem Packmaterial auszufüllen. Dabei werden als schüttfähiges Packmaterial bspw. Schaumstoff-Formteile, wie Kunststoff-Schnipsel verwendet. Derartiges Kunststoff-Füllgut muß gesondert hergestellt werden, was Kosten mit sich bringt, und muß in irgendeiner Weise wieder vernichtet werden, was bei bestimmten Kunststoffarten zu einer erheblichen Umweltbelastung führt. Es ist aber auch bekannt als Packmaterial bspw. Holzwolle zu verwenden, die jedoch in umständlicherer Weise handhabbar ist, da sie nicht schüttfähig ist. Außerdem muß auch Holzwolle aus einem auch in anderer Weise verwertbaren Rohstoff gesondert hergestellt werden. Ferner ist aus der GB-A-1 300 816 ein Verpackungsmaterial bekannt, das aus wendelartigen, linienförmigen Papierstreifen besteht, die aus von einer Papierrolle endlos abzuziehendem Packpapier durch Verknautschen des Packpapiers und Schneiden hergestellt werden. Auch diese Art von Packmaterial ist nicht umweltfreundlich, da sie aus neuem Packpapier hergestellt werden. Darüber hinaus bilden diese wendelförmigen Papierstreifen eine weitgehend zusammenhängende Masse, die, ähnlich wie Holzwolle, durch Ineinanderverhaken der Streifen entstehen, so daß auch dieses Packmaterial nicht schüttfähig ist.

Darüber hinaus ist aus dem DE 87 16 083 U1 eine Packeinheit bekannt geworden, die aus einer Umhüllung aus Papier und darin lose eingefülltem gehächseltem Stroh o.dgl. besteht. Bei dieser Packeinheit ist die Umhüllung entweder als mattenartig zusammenhängendes Kissen aus zwei übereinander gelegten und schachbrettartig abgesteppten Papierbögen oder als Einzelkissen aus einem gedoppelten Papierstreifen, dessen lose Ränderpaare miteinander verbunden sind, gebildet. Derartige Kissen sind in aufwendiger Weise herzustellen und zu füllen. Außerdem muß zur Aufnahme von gehächseltem Stroh das Papier für die Umhüllung besonders stabil sein und mit einer besonders stabilen Randverbindung versehen sein, damit das gehächselte Stroh dieses Papier nicht durchstößt. Sollte dies dennoch geschehen, so kann das gehächselte Stroh durch die kleinste Öffnung austreten, was insbesondere bei mit Lüftungsöffnungen versehenen Maschinen, einfetteten Verpackungsteilen und dgl. zu Problemen führt, wenn man bedenkt, daß dieses gehächselte Stroh in Lager von solchen Maschinen eindringt. Mit anderen Worten, eine derart sich in ihre Einzelteile auflösende Packeinheit ist für den betreffenden Empfänger einer mit der Packeinheit versehenen Sendung nicht nur mit Arbeit, sondern ggf. auch mit Schaden verbunden.

Aufgabe der vorliegenden Erfindung ist es ein schüttfähiges Packmaterial und eine damit versehene Packeinheit anzugeben, das bzw. die in kostengünstiger Weise herstellbar ist und in umweltfreundlicher Weise von vorhandenem, bisher unmittelbar zur Vernichtung bestimmten oder einem Recyclingprozeß zugeführten Material Gebrauch macht. Desweiteren soll ein Verfahren und eine Einrichtung zum Herstellen von derartigen schüttfähigen Packmaterialien bzw. Packeinheiten angegeben werden.

Zur Lösung dieser Aufgabe sind bei einem schüttfähigem Packmaterial die im Anspruch 1 angegebenen Merkmale bei einer damit versehenen Packeinheit die in Anspruch 11 angegebenen Merkmale und bei einem Verfahren und einer Einrichtung zum Herstellen von derartigen schüttfähigen Packmaterialien bzw. Packeinheiten die im Anspruch 4 oder 13 bzw. 7 angegebenen Merkmale vorgesehen.

Damit ist ein schüttfähiges Packmaterial gegeben, das in vorteilhafter Weise aus einem Material bzw. Werkstoff hergestellt ist, der bereits in anderer Weise, bspw. als Kartonage bzw. Verpackungsbehältnis Verwendung gefunden hat und der somit, bevor er seiner endgültigen Vernichtung, im Wege der Verbrennung oder im Wege des Recyclings einer weiteren Verwendung zugeführt wird. Diese kostengünstige Zwischenverwendung eines bereits benutzten Werkstoffes schadet einem späteren Recyclingprozeß nichts, so daß das schüttfähige Packmaterial deshalb in kostengünstiger Weise hergestellt werden kann, weil es im wesentlichen lediglich eine Investition für die Maschinen zu deren Herstellung bedeutet.

Dieses erfindungsgemäße schüttfähige Packmaterial ist außerdem umweltfreundlich, da es keine Rohstoffe im eigentlichen Sinne verbraucht.

Die Schüttvolumenvergrößerung der Schnipsel kann in vielfältiger Weise erfolgen, bspw. durch Ausklinken von einer Vielzahl von Bereichen längs der Kartonstückfläche oder auch durch einfaches Umbiegen von Randbereichen der Kartonstücke. Gemäß einem bevorzugten Ausführungsbeispiel jedoch sind die Merkmale gemäß Anspruch 3 vorgesehen, was zu einer optimalen Schüttvolumenvergrößerung führt, die über im wesentlichen die gesamte Längs- und Quererstreckung des Schnipsels gleichmäßig verteilt ist, so daß die schüttfähigen Packmaterialschnipsel unabhängig von ihrer zufälligen Lage innerhalb eines Verpackungsbehältnisses in gleicher Weise stoß-, schlag-, vibrationsaufnehmend wirken.

Entsprechendes gilt für die erfindungsgemäße Packeinheit, bei der es darüber hinaus unschädlich ist, wenn während des Verpackungsvorganges in der Umhüllung ein kleines Loch oder ein kleiner Riß entsteht, da die eingefüllten Kartonschnipsel diesen kleinen Riß oder kleine Loch eher von innen her zudecken als daß sie hierdurch aus der Umhüllung entweichen können. Die Umhüllung der Packeinheit kann ausschließlich mit den Kartonschnipsel gefüllt sein. Es ist aber auch möglich, zu den Kartonschnipseln in einem geringeren Anteil Papierstreifen hinzuzufügen, wie man sie bspw. einem der Aktenvernichtung dienenden "Reißwolf" erhält.

Das erfindungsgemäße Verfahren und die erfindungsgemäße Einrichtung zum Herstellen von derartigem schüttfähigem Packmaterial in Form von zur Schüttvolumenvergrößerung verformten Kartonschnipseln ist denkbar einfach und kostengünstig durchzuführen bzw. herzustellen, da es sich lediglich um die Zerkleinerung des Ausgangsmaterials, also des Kartons bspw. Verpackungskartons und um eine entsprechende Verformung des Ausgangsmaterials bzw. der daraus hergestellten Kartonstücke zu den Schnipseln handelt.

Das erfindungsgemäße Verfahren zum Herstellen von derartigen Packeinheiten ist in schneller und einfacher Weise durchzuführen, da der Papierstreifen in einfacher Weise um den hohlen Wickelkern in die Form eines schlauchförmigen Wickels gebracht werden kann, der während der Herstellung jeweils chargenweise, ohne daß der Wickelvorgang unterbrochen werden muß, mit den Kartonschnipseln gefüllt werden kann. Außerdem ist es möglich, während des Wickelvorganges ohne Unterbrechung den schlauchförmigen Wickel abschnittsweise sackartig zu verschließen und in bevorzugter Weise zwischen zwei benachbarten sackartigen Verschlüssen durchzuschneiden. Dabei ist es ohne weiteres auch möglich, den hohlen Wickelkern in seinem Durchmesser veränderbar zu machen und/oder die Vorrichtungen zum Verschließen und Abschneiden des schlauchförmigen Wickels höhenverstellbar zu machen, so daß Packeinheiten unterschiedlichen Durchmessers und unterschiedlicher Länge in ein und demselben Verfahren bzw. mit ein und derselben Einrichtung hergestellt werden können.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figuren 1A-D: ein schüttfähiges Packmaterial in Form eines Kartonschnipsels gemäß einem bevorzugten AusführungsbeispieI vorliegender Erfindung im Schnitt, in Seitenansicht, in Draufsicht bzw. in perspektivischer Ansicht,
- Figur 2: in schematischer Darstellung eine Einrichtung zum Herstellen von derartigem sthüttfähigem Packmaterial aus Karton gemäß einem Ausführungsbeispiel vorliegender Erfindung,
- Figur 3: in schematischer Darstellung eine Ansicht der Einrichtung gemäß Pfeil III der Fig. 2,
- Figur 4: in vergrößerter Darstellung eine Stirnansicht einer Vorrichtung zum Verformen von Kartonstücken der Einrichtung nach Fig. 2,
- Figur 5: eine Ansicht gemäß Pfeil V der Fig. 4,
- Figur 6: in schematischer perspektivischer Darstellung eine aus mehreren Packschnipseln nach Fig. 1 und einer Umhüllung bestehende Packeinheit, und
- Figur 7: einen Schnitt längs der Linien VII-VII der Fig. 6.

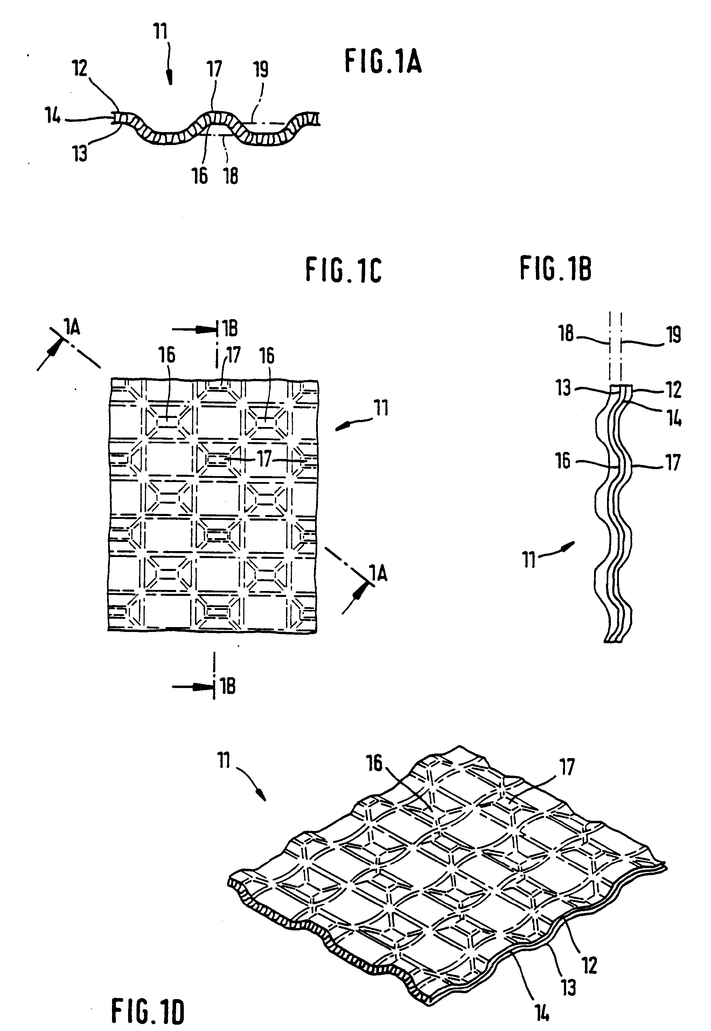

Die Figuren 1A-D zeigen in verschiedenen Schnitten und Ansichten schüttfähiges Packmaterial gemäß einem bevorzugten Ausführungsbeispiel vorliegender Erfindung in Form von aus einem Verpackungskarton hergestellten Kartonschnipseln in einer Größenordnung von bspw. etwa 40 x 50 mm. Derartige Schnipsel 11, von denen einer in Fig. 1 dargestellt ist, sind aus einem in üblicher Weise für Kartonagen bzw. Verpackungen verwendeten einlagigen Karton hergestellt, der aus zwei äußeren Papier- bzw. Pappbahnen 12, 13 mit einer dazwischen angeordneten Wellpappenschicht 14 hergestelIt ist. Es versteht sich, daß auch andere Arten von Verpackungskarton, insbesondere auch dickere, wie bspw. zwei- oder mehrlagige Verpackungskartons, oder einfache Kartons verwendet werden können. Bevorzugt werden die Packschnipsel 11 aus gebrauchten bzw. Alt-Kartonagen hergestellt sind.

Der in Fig. 1D dargestellte Schnipsel 11, der zusammen mit einer Vielzahl anderer als schüttfähiges Packmaterial Verwendung findet, besitzt zur Vergrößerung des Schüttvolumens um etwa 20% gegenüber einem ebenen Verpackungskartonstück entsprechender Abmessungen in einer etwa gleichmäßigen Matrix angeordnete Vertiefungen bzw. Mulden 16 und Erhebungen 17, die derart angeordnet sind, daß jeder Vertiefung 16 in der einen Oberfläche 18 des Schnipsels 11 eine entsprechende Erhebung 17 aus der anderen Oberfläche 19 des Schnipsels 11 heraus entspricht. Dabei ist jeweils eine Vielzahl derartiger Vertiefungs-/Erhebungs-Paare 16, 17 in parallelen Reihen angeordnet, wobei die Richtung dieser Vertiefungen bzw. Erhebungen zwischen benachbarten Reihen entgegengesetzt sind. Mit anderen Worten, während in der einen Reihe die Erhebungen über die Oberfläche 19 stehen, erheben sie sich in der anderen Reihe über die Oberfläche 18 hinaus. In einer Richtung quer zu den genannten jeweils in derselben Weise mit den Vertiefungen 16 bzw. Erhebungen 17 versehenen Reihen folgt jeweils bezüglich derselben Oberfläche 18 oder 19 neben einer Vertiefung eine Erhebung, dann wieder eine Vertiefung und wieder eine Erhebung usw. Es versteht sich, daß die Vertiefungen 16 und Erhebungen 17 in der genannten Querrichtung auch zueinander versetzt sein können.

Es versteht sich ferner, daß die Schnipsel 11 nicht nur wie dargestellt rechteckförmig sein können, sondern jede beliebige andere geometrische Form aufweisen können. Dabei ist es zur einfacheren Herstellung zweckmäßig, in bestimmten Grenzen Variationen bezüglich der Form und Abmessungen der Schnipsel 11 zuzulassen.

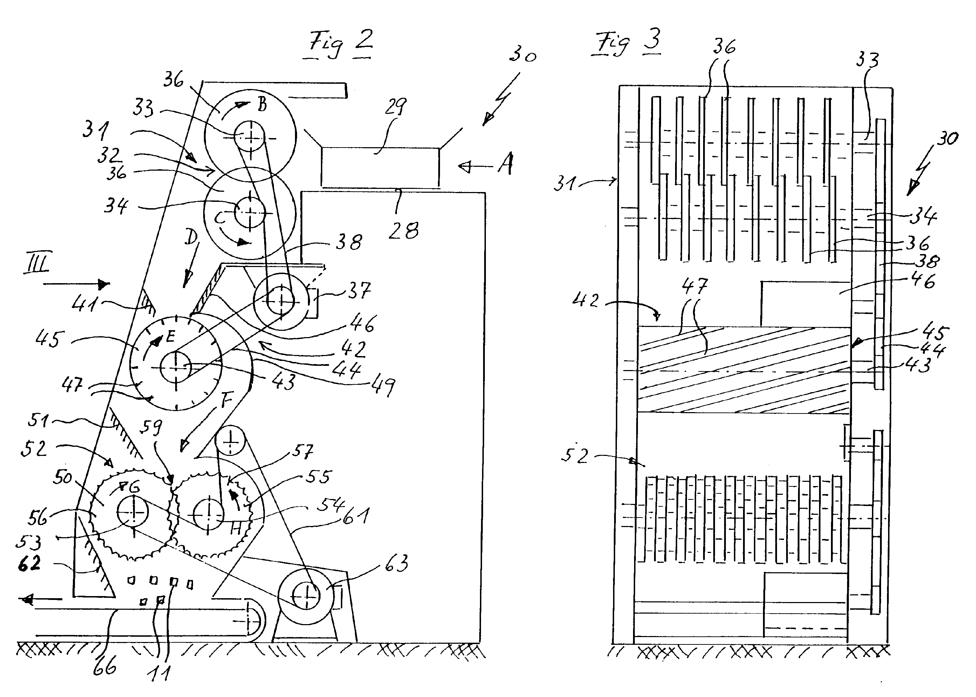

Anhand einer in den Figuren 2, 3 und 4, 5 dargestellten Einrichtung 30 zum Herstellen derartiger schüttfähiger Packschnipsel 11 sei gleichzeitig auch ein bevorzugtes Verfahren zu deren Herstellung beschrieben.

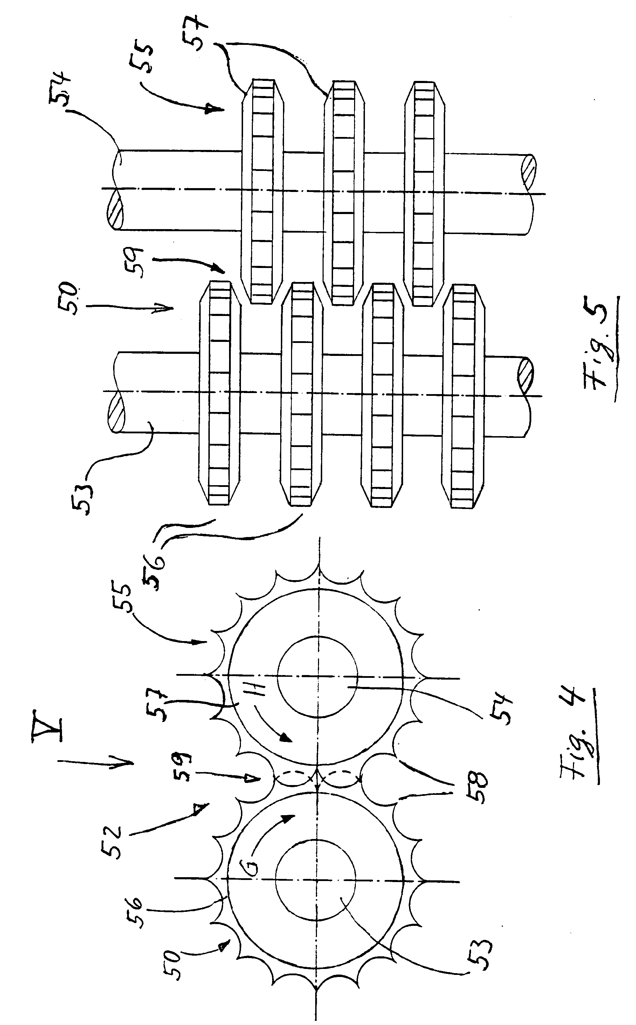

Gemäß den Fig. 2 und 3 besitzt die Einrichtung 30 ein Längsschneideaggregat 31, welchem auf einer Tischfläche 28 oder einem Transportband Kartons 29 in aufgefaltetem oder zusammengeklapptem Zustand gemäß Pfeil A zugeführt werden. Das Längsschneideaggregat 31, in welchem die Kartons 29 in Längsstreifen geschnitten werden, besitzt in bekannter Weise ein Schneidwerk 32 aus auf zwei hier übereinander liegenden Wellen 33, 34 im Abstand angeordneten Scheibenmessern 36, die im Schneidebereich ineinandergreifen und aneinander anliegen. Die Wellen 33 und 34 drehen sich gemäß dem Pfeil B und C gegeneinander derart, daß sie den zu schneidenden Karton 29 zwischen sich einziehen können. Die beiden Wellen 33, 34 sind von einem Motor 37 bspw. mittels eines Riemens 38 angetrieben. Die Längsstreifen, deren Breite einer der Abmessung der fertigen Packschnipsel 11 entspricht, fallen ausgangsseitig des Längsschneideaggregats 31 gemäß Pfeil D über einen unterhalb angeordneten Trichter 41 in ein Querschneideaggregat 42, das einen Schneidzylinder 45 und ein ortsfestes Messer 46 aufweist. Eine Welle 43 des Schneidzylinders 45 wird vom selben Motor 37 ebenfalls bspw. mittels eines Riemens 44 gemäß Pfeil E zum gegen die Drehrichtung geneigten ortsfesten Messer 46 hin angetrieben. Um die Welle 43 ist eine Vielzahl parallel zur Welle angeordneter, etwa schraublinienförmige Messerleisten 47 angeordnet, zwischen denen und dem ortsfesten Messer 46 die Kartonstreifen in mehrere Stücke geschnitten werden. Hinter-diesem Schneidebereich des Querschneideaggregats 42 ist ein Führungsblech 49 angeordnet, das die Kartonstücke gemäß Pfeil F zu einem unterhalb des Schneidszylinders 45 angeordneten zweiten Trichter 51 führt, der oberhalb einer Verformungsvorrichtung 52 mündet bzw. ausläuft.

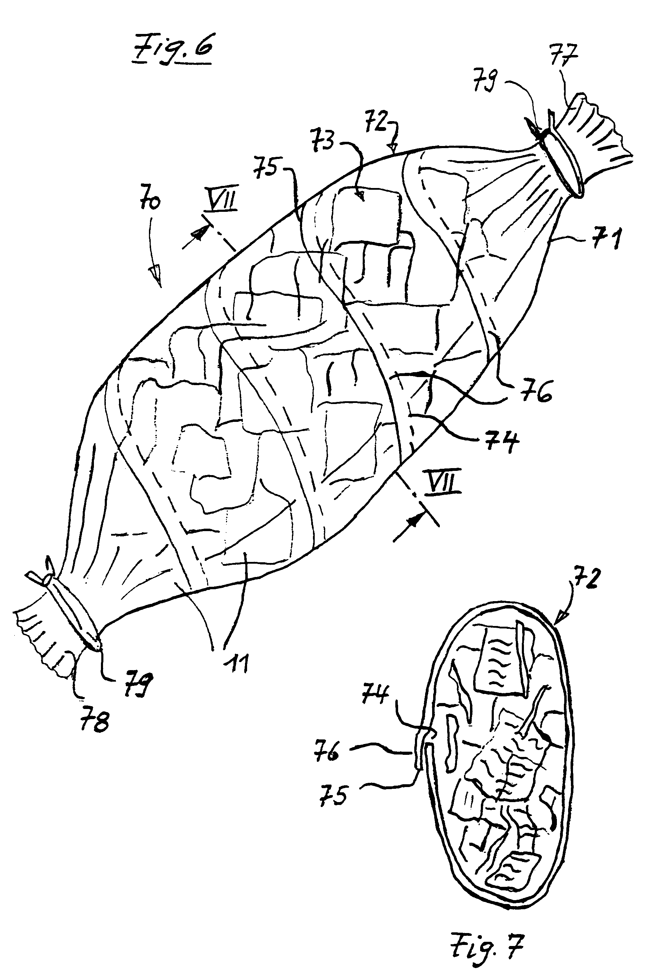

Die Verformungsvorrichtung 52 dient dazu, zur Herstellung der endgültigen schüttfähigen Packschnipsel 11 den ebenen Kartonstücken die Schüttvolumenvergrößerung durch die Vertiefungen 16 und Erhebungen 17 zu verleihen. Dazu besitzt, wie auch den Fig. 5 und 6 zu entnehmen ist, die Verformungsvorrichtung 52 zwei gemäß den Pfeilen G und H gegenläufig angetriebene Verformungseinheiten 50, 55, auf deren Wellen 53, 54, mehrere in gleichem Abstand angeordnete Verformungsräder 56, 57 drehfest angeordnet sind. Dabei greifen die Verformungsräder 56 auf der einen Welle 53 zwischen die Verformungsräder 57 auf der anderen Welle 54. Die Verformungsräder 56, 57 sind nach Art von Kettenrädern ausgebildet, wobei, wie Fig. 4 zeigt, die jeweiligen Spitzen 58 der zwischen einander greifenden Verformungsräder 56, 57 im Verformungsbereich 59 jeweils einander gegenüberliegen. Es versteht sich, daß die einzelnen Spitzen 58 auch um einen bestimmten Winkel gegeneinander versetzt sein können, was zu einer versetzten Anordnung von Vertiefungen 16 und Erhebungen 17 führt.

Die beiden Wellen 53 und 54 werden über bspw. einen Riemen 61 von einem Elektromotor 63 angetrieben. Die einzelnen Kartonstücke, die aus dem zweiten Trichter 51 zwischen die beiden Wellen 53, 54 mit den Verformungsrädern 56, 57 fallen, werden von diesen ergriffen und zwischen den Spitzen 58 der Verformungsräder 56, 57 in Fig. 1 beschriebener Weise zu den Packschnipseln 11 verformt. Ausgangsseitig, also unterhalb der Verformungsvorrichtung 52 ist ein Förderband 66 angeordnet, das die Packschnipsel 11 zu einer bspw. weiteren Fördereinrichtung führt, welche die Packschnipsel 11 bspw. über Druckluft betriebene Leitungen zu einzelnen Verpackungsstationen führt.

Die Trichter 41, 51 einschließlich eines dritten Trichters 62 am Ausgang der Verformungsvorrichtung 52 sind als Gitter ausgebildet und stehen umfangsseitig in nicht näher dargestellter Weise mit einer Absauganlage in Verbindung, so daß während des Herstellungsprozesses der Packschnipsel 11 aus dem Verpackungskarton 29 Kartonstaub und kleinere Kartonfetzen, die nicht brauchbar sind, abgesaugt werden können.

Gemäß den Fig. 6 und 7 ist eine Vielzahl von Packschnipseln 11 zu einer Packeinheit 70 derart zusammengefasst, daß diese Vielzahl von Schnipsel 11 in eine beidendig verschlossene Umhüllung 71 lose eingebracht ist. Die Umhüllung 71 besitzt die Form eines schlauchförmigen Wickels 72, der durch eine schraubenlinienförmig bzw. wendelförmig verlaufende Papierbahn 73 aus vorzugsweise Recyclingpapier gebildet ist, wobei die benachbarten Längsränder 74, 75 der Papierbahn 73 sich einander überlappen und im Überlappungsbereich 76 miteinander fest verbunden sind. Bspw. sind die oberen und unteren Längsränder 74 und 75 der Papierbahn 73 im Überlappungsbereich 76 durch eine Klebeauflage oder durch Rändeln oder in sonstiger Weise miteinander verbunden. Der schlauchförmige Wickel 72 ist an seinen beiden Enden mit einem bei Säcken oder Würsten üblichen Verschluß 77, 78 versehen, der bspw. mittels eine Bandes 79 zusammengehalten ist. Der Füllgrad der Umhüllung 71 mit den Packschnipseln 11 ist derart, daß die Packeinheit 70 sich durch Verrutschen der Packschnipsel innerhalb der Umhüllung vorhandenen Gegebenheiten in seinen Abmessungen anpassen kann. Gemäß einer Variante ist es auch möglich, den Kartonschnipseln zu einem wesentlich geringeren Anteil Papierstreifen, wie sie bei der Aktenvernichtung entstehen, in die Umhüllung 71 mit beizugeben. Fig. 7 zeigt, daß der Wickel 72 sich aufgrund seines losen Füllgrades in liegendem Zustand zu einem im Querschnitt ovalen Wickel bzw. Schlauch verändert.

Zur Herstellung einer in den Figuren 6 und 7 dargestellten Packeinheit wird ein schlauchförmiger Wickel 72 hergestellt, dieser mit Kartonschnipseln 11 gefüllt und beidendig sackartig veschlossen. Dabei wird die Papierbahn 73 unter einem vorgegebenen Winkel einem hohlen Wickelkern zugeführt und um diesen schraubenlinienförmig gewickelt. Die sich dabei überlappenden benachbarten, schraubenlinienförmig verlaufenden Längsränder der Papierbahn werden miteinander verbunden. Dies erfolgt bspw. in der Weise, daß die beiden Längsränder der Papierbahn, von denen der obere Längsrand einen Klebestreifen besitzt, im Überlappungsbereich aufeinander gedrückt werden. Das vorauslaufende Wickelende wird jenseits des Wickelkerns sackartig verschlossen. Bspw. wird der schlauchförmige Wickel an zwei Stellen mit einem sackartigen Verschluß durch Zusammenbinden und Umwickeln mit einem Band versehen. Gleichzeitig wird zwischen den beiden sackartigen Verschlüssen der schlauchförmige Wickel aufgetrennt bzw. durchgeschnitten, so daß die vorauslaufende, bereits gefüllte Packeinheit obenseitig verschlossen ist, während der nachlaufende Wickel bodenseitig verschlossen ist. Ist dieser schlauchförmige Wickel in seiner geforderten Länge hergestellt, wird er durch den hohlen Wickelkern hindurch in dosierter Weise mit den Kartonschnipseln lose gefüllt und dann, wie bereits erwähnt, sackartig verschlossen und vom folgenden schlauchförmigen Wickel getrennt.

## Patentansprüche

1. Schüttfähiges Packmaterial, gekennzeichnet durch Schnipsel (11) aus Karton, insbesondere aus Verpackungskarton, die durch Längs- und querschneiden von ebenem vorzugsweise gebrauchtem Verpackungskarton (29) gebildet sind und deren Schüttvolumen durch Ausklinkungen und/oder Umbiegungen und/oder Erhebungen (17) und/oder Vertiefungen (16) vergrößert ist.

2. Packmaterial nach Anspruch 1, dadurch gekennzeichnet, daß die Schüttvolumenvergrößerung durch eine im wesentlichen gleichförmige Matrix von gegenüberliegenden Erhebungen (17) und Vertiefungen (16) gebildet ist, die reihenweise abwechselnd angeordnet sind.

3. Packmaterial nach einem der vorhergehenden Ansprüche, dadurch gekennzeichnet, daß die Schüttvolumenvergrößerung im Bereich von 20% liegt und die Packschnipsel (11) größenordnungsmäßig bei etwa 40 x 50 mm liegen.

4. Verfahren zum Herstellen von schüttfähigem Packmaterial nach mindestens einem der vorhergehenden Ansprüche, dadurch gekennzeichnet, daß der Karton, insbesondere Verpackungskarton durch Schneiden zerkleinert und zur Vergrößerung des Schüttvolumens der das Packmaterial bildenden Schnipsel eine Verformung durch Ausklinkungen und/oder Umbiegungen und/oder Erhebungen (17) und/oder Vertiefungen (16) erfolgt.

5. Verfahren nach Anspruch 4, dadurch gekennzeichnet, daß der Karton zuerst in Streifen und dann die Streifen in Querrichtung geschnitten wird bzw. werden und daß dann die Kartonstücke zur Bildung der Schnipsel verformt werden.

6. Verfahren nach Anspruch 4 oder 5, dadurch gekennzeichnet, daß Kartonstaub und zu kleine Kartonfetzen, der bzw. die beim Zerkleinern des Kartons anfällt bzw. anfallen, abgesaugt werden.

7. Einrichtung zum Herstellen von schüttfähigem Packmaterial nach mindestens einem der Ansprüche 1 bis 3, **gekennzeichnet durch** eine ein Längs- und ein Querschneideaggregat (31,42) aufweisende Vorrichtung (31,42) zum Zerkleinern von Karton, insbesondere Verpackungskarton, und durch eine Vorrichtung (52) zum Verformen des Kartons für die Schüttvolumenvergrößerung der das Packmaterial bildenden Schnipsel (11).

8. Einrichtung nach Anspruch 7, dadurch gekennzeichnet, daß die Vorrichtung (52) zum Verformen des Kartons zwei gegenläufig angetriebene, mit Verformungsrädern (56,57) versehene Wellen (53,54) aufweist, wobei die Verformungsräder (56,57) der einen Welle (53,54) bezüglich der Verformungsräder (57,56) der anderen Welle (54,53) auf Lücke und zwischen einander greifend angeordnet sind.

9. Einrichtung nach Anspruch 7 oder 8, dadurch gekennzeichnet, daß die Vorrichtung (31,42) zum Zerkleinern, deren Längs- und Querschneideaggregat (31,42) untereinander angeordnet sind, und die Vorrichtung (52) zum Verformen untereinander angeordnet sind.

10. Einrichtung nach mindestens einem der Ansprüche 7 bis 9, dadurch gekennzeichnet, daß die Vorrichtung (31,42) zum Zerkleinern zumindest teilweise und die Vorrichtung (52) zum Verformen mit einer Absauganlage verbunden sind.

11. Packeinheit (70) aus einer zumindest zu einem wesentlichen Teil mit dem schüttfähigen Packmaterial (11) nach mindestens einem der Ansprüche 1 bis 3 lose gefüllten Umhüllung (71) aus einer Papierbahn (73), bei der die Umhüllung (71) durch die nach Art eines schraubenlinienförmigen Wickels (72) geformte Papierbahn (73) gebildet ist, deren benachbarte, schraubenlinienförmig verlaufende Längsränder (74,75) miteinander überlappend verbunden sind, und bei der die Umhüllung (71) beidendig nach Art eines Sackes verschlossen ist.

12. Packeinheit nach Anspruch 11, dadurch gekennzeichnet, daß die Papierbahn (73) aus Recyclingpapier ist.

13. Verfahren zum Herstellen von Packeinheiten nach Anspruch 11 oder 12, dadurch gekennzeichnet, daß die Papierbahn unter einem vorgegebenen Winkel einem Wickelkern zugeführt und um diesen schraubenlinienförmig gewickelt wird, wobei die benachbarten schraubenlinienförmig verlaufenden Längsränder miteinander verbunden werden, daß das vorauslaufende Wickelende jenseits des Endes des Wickelkerns sackartig verschlossen wird, daß dann der schlauchförmige Wickel mit den Kartonschnipseln lose gefüllt wird und daß dann nach einer bestimmten Wickellänge der Wickel sackartig verschlossen und jenseits dieses Endes abgeschnitten wird.

14. Verfahren nach Anspruch 13, dadurch gekennzeichnet, daß mit dem sackartigen Verschließen des anderen Endes des gefüllten Wickels gleichzeitig in einem Abstand davon das eine Ende des nachfolgenden, noch leeren Wickels sackartig verschlossen wird.

## Claims

1. A bulk packaging material characterized by chips (11) of cardboard, preferably packaging cardboard, which chips are formed by cutting plane, preferably used packaging cardboard (29) both lengthwise and crosswise and such that their bulk volume is increased by copings and/or bent-over portions and/or peaks (17) and/or recesses (16).

2. The packaging material as defined in claim 1, characterized in that the increase of the bulk volume is defined by a substantially uniform matrix of opposed peaks (17) and recesses (16), disposed alternatingly in rows.

3. The packaging material as defined in one of the preceeding claims, characterized in that the increase of the bulk volume is in the order of 20 %, and that the chips (11) have a size in the order of approximately 40 x 50 mm.

4. A process for producing bulk packaging material as defined in at least one of the preceeding claims, characterized in that the cardboard, preferably packaging cardboard, is size-reduced by cutting and that for an increase of the bulk volume of the chips, forming the packaging material the deforming is performed by copings and/or bent-over portions and/or peaks and/or recesses (16).

5. The process as defined in claim 4, characterized in that the cardboard is first cut into strips, and then the strips are cut crosswise and that thereafter the cut pieces are deformed to form the chips.

6. The process as defined in claim 4 or 5, characterized in that the cardboard dust and too little shreds of cardboard formed during size reduction are sucked off.

7. An apparatus for producing bulk packaging material as defined in at least one of claims 1 - 3, characterized by a device (31,42) for cutting cardboard, preferably packaging cardboard into chips, including a lengthwise cutting unit (31) and a crosswise cutting unit (42), and by a device (52) for deforming the cardboard to increase the bulk volume of the chips (11) forming the packaging material.

8. The apparatus as defined in claim 7, characterized in that the device (52) for deforming the cardboard includes two oppositely driven shafts (53,54), each provided with deforming wheels (56,57), with the deforming wheels (56,57) of one shaft (53,54) being offset with respect to the deforming wheels (56,57) of the other shaft (54,53) such that each deforming wheel engages the gap between adjacent deforming wheels on the other shaft.

9. The apparatus as defined in claim 7 or 8, characterized in that the device (31,42) for size reduction, the lengthwise and crosswise cutting units (31,42) of which are disposed one below the other, and the deforming device (52) are disposed one below the other.

10. The apparatus as defined in at least one of claims 7 - 9, characterized in that the device (31,42) for size reduction at least partly and the deforming device (52) are connected to a suction unit.

11. A packaging unit (70) comprising a wrapper (71) consisting of a web (73) of paper and being at least in its essential part loosely filled with bulk packaging material (11) as defined in at least one of claims 1-3, said wrapper (71) being formed by the web (73) of paper shaped in the manner of a helical roll (72), the adjacent, helically extending longitudinal edges of which are joined overlapping one another, and the ends of which are closed in the manner of a sack.

12. The packaging unit as defined in claim 11, characterized in that the web (73) of paper (73) is made of recycled paper.

13. A process for producing packing units as defined in claim 11 or 12, characterized in that the paper web is delivered to a winding core at a predetermined angle and is helically wound around the winding core such that the adjacent, helically extending longitudinal edges are joined together, that the leading winding edge is closed in a sack-like fashion beyond the end of the winding core, that the wound tubular roll is loosely filled with chips of cardboard, and that after a specific length the wound tubular roll is closed at the other end in a sack-like fashion and is cut off at the far side of said other end.

14. The process as defined in claim 13, characterized in that one end of the next, still empty roll is closed in a sack-like fashion simultaneously with closing in a sack-like fashion said other end of the previous roll.

## Revendications

1. Matériau de remplissage pour empaquetage, pouvant couler, caractérisé par des flocons (11) de carton, en particulier de carton d'emballage, qui sont obtenus par la découpe en sens longitudinal et en sens transversal de carton d'emballage (29) plan, de préférence usagé et dont le volume apparent est augmenté au moyen d'encoches et/ou d'incurvations et/ou de bosses (17) et/ou de creux (16).

2. Matériau de remplissage selon la revendication 1, caractérisé en ce que l'augmentation du volume apparent est obtenu par une matrice uniforme de bosses (17) et de creux (16) opposés qui sont disposés en alternance par rangées.

3. Matériau de remplissage selon une quelconque des revendications précédents, caractérisé en ce que l'augmentation du volume apparent est de l'ordre de grandeur de 20 % et en ce que les dimensions des flocons de remplissage sont de 40 x 50 mm environ.

4. Procédé de fabrication de matériau de remplissage pour empaquetage, pouvant couler, selon au moins une des revendications précédentes, caractérisé en ce que le carton, en particulier du carton d'emballage, est fractionné par découpage et en ce que, pour augmenter le volume apparent des flocons constituant le matériau de remplissage, il est procédé à une déformation par des encoches et/ou des incurvations et/ou des bosses (17) et/ou des creux (16).

5. Procédé selon la revendication 4, caractérisé en ce que le carton est découpé d'abord en bandes et ensuite les bandes sont découpées en sens transversal et en ce que, ensuite, les morceaux de carton sont déformés pour la formation des flocons.

6. Procédé selon la revendication 4 ou 5, caractérisé en ce que la poussière de carton et les morceaux de carton trop petits qui sont produits comme résidus lors du fractionnement du carton sont évacués par aspiration.

7. Dispositif pour la fabrication du matériau de remplissage pour empaquetage, pouvant couler, selon au moins l'une des revendications 1 à 3, caractérisé par un dispositif (31, 42) de fractionnement de carton, en particulier de carton d'emballage, comprenant une unité (31) de coupe en sens longitudinal et une unité (42) de coupe en sens transversal, et par un dispositif (52) de déformation du carton pour l'augmentation du volume apparent des flocons (11) constituant le matériau de remplissage.

8. Dispositif selon la revendication 7, caractérisé en ce que le dispositif (52) de déformation du carton possède deux arbres (53, 54) entraînés en sens opposés, pourvus de roues de déformation (56, 57), et les roues de déformation (56, 57) de l'un des arbres (53, 54) sont disposées en quinconce par rapport aux roues de déformation (57, 56) de l'autre arbre (54, 53) et s'engagent les unes entre les autres.

9. Dispositif selon la revendication 7 ou la revendication 8, caractérisé en ce que d'une part le dispositif (31, 42) pour le fractionnement dont l'unité de coupe longitudinale (31) et l'unité de coupe transversale (42) sont disposées l'une en-dessous de l'autre, et d'autre part le dispositif de déformation (52) sont disposés l'un en-dessous de l'autre.

10. Dispositif selon au moins l'une des revendications 7 à 9, caractérisé en ce que le dispositif (31, 42) pour le fractionnement est relié au moins en partie à une installation d'aspiration et le dispositif de déformation (52) est relié à une installation d'aspiration.

11. Unité d'emballage (70) constituée par une enveloppe (71) réalisée à partir d'une feuille de papier continue (73), remplie en vrac, au moins dans une proportion substantielle, du matériau de remplissage (11) pouvant couler conforme à l'une quelconque au moins des revendications 1 à 3, dans laquelle l'enveloppe (71) est constituée par la feuille de papier continue (73) ayant reçu la configuration d'un enroulement (72) hélicoïdal dont les bords longitudinaux (74,75) voisins s'étendant hélicoïdalement sont assemblés l'un à l'autre en se chevauchant, et dans laquelle l'enveloppe (71) est fermée aux deux extrémités à la façon d'un sac.

12. Unité d'emballage selon la revendication 11, caractérisée en ce que la feuille de papier continue est faite en papier de recyclage.

13. Procédé de fabrication d'unités d'emballage selon la revendication 11 ou la revendication 12, caractérisé en ce que la feuille de papier continue est conduite avec un angle prédéfini à un noyau d'enroulement et elle est enroulée autour de celui-ci hélicoïdalement, les bords longitudinaux voisins s'étendant hélicoïdalement étant réunis l'un à l'autre, l'extrémité avant de la feuille enroulée est fermée à la façon d'un sac au-delà de l'extrémité du noyau d'enroulement, ensuite l'enroulement tubulaire est rempli en vrac de flocons de carton, et enfin, après une longueur d'enroulement déterminée, l'enroulement est fermé à la façon d'un sac et est coupé au-delà de cette extrémité.

14. Procédé selon la revendication 13, caractérisé en ce qu'en même temps qu'est fermée à la façon d'un sac la deuxième extrémité de l'enroulement rempli, une extrémité de l'enroulement suivant encore vide est fermée à la façon d'un sac à une certaine distance de la deuxième extrémité du sac précédent.
